(19) Europäisches Patentamt
European Patent Office
Office européen des brevets

(11) EP 4 212 570 A1

(12) **EUROPEAN PATENT APPLICATION**
published in accordance with Art. 153(4) EPC

(43) Date of publication:
**19.07.2023 Bulletin 2023/29**

(21) Application number: **21869665.6**

(22) Date of filing: **13.09.2021**

(51) International Patent Classification (IPC):
***C08G 63/85*** *(2006.01)* ***C08G 63/16*** *(2006.01)*

(52) Cooperative Patent Classification (CPC):
**C08G 63/16; C08G 63/85**

(86) International application number:
**PCT/KR2021/012442**

(87) International publication number:
**WO 2022/060043 (24.03.2022 Gazette 2022/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **16.09.2020 KR 20200119294**
**09.09.2021 KR 20210120593**

(71) Applicant: **Kolon Industries, Inc.**
**Seoul 07793 (KR)**

(72) Inventors:
- **KIM, Ho Sub**
  **Seoul 07793 (KR)**
- **NOH, Kyung Gyu**
  **Seoul 07793 (KR)**
- **SUH, Young Sung**
  **Seoul 07793 (KR)**
- **HONG, Choong Hee**
  **Seoul 07793 (KR)**
- **PARK, Ki Hyun**
  **Seoul 07793 (KR)**
- **PARK, No Woo**
  **Seoul 07793 (KR)**

(74) Representative: **Ter Meer Steinmeister & Partner Patentanwälte mbB**
**Nymphenburger Straße 4**
**80335 München (DE)**

(54) **NOVEL CATALYST MATERIAL FOR PRODUCING POLYESTER, METHOD FOR PRODUCING POLYESTER USING SAME, AND POLYESTER PRODUCED THEREBY**

(57) The present invention provides a novel catalyst material used to produce polyester having improved molecular weight and color from a dicarboxylic acid aromatic heterocyclic compound or a derivative thereof.

EP 4 212 570 A1

## Description

### [Technical Field]

The present invention relates to a novel catalyst material used for producing polyester from a dicarboxylic acid aromatic heterocyclic compound or a derivative thereof, a method for producing polyester using the same, and a polyester produced using the same.

### [Background Art]

In order to reduce greenhouse gases, developed countries such as the United States and Europe are strengthening carbon dioxide emission regulations. Therefore, there is an increasing demand for the biochemical industry that can reduce dependence on existing fossil raw material resources and reduce greenhouse gases. In other words, the chemical industry is changing from petroleum-dependent to bio-dependent.

For example, a technology to replace polyethylene terephthalate (PET), which is mainly used for beverage bottles or food storage containers, with bio-based polyester is being actively researched.

A dicarboxylic acid aromatic heterocyclic compound or a derivative thereof useful as a monomer in the production of polyester may be a derivative usually produced by oxidizing 5-hydroxymethylfurfural, and a representative example may be 2,5-furan dicarboxylic acid. For reference, since 5-hydroxymethylfurfural (HMF) is obtained from sugar, it is a derivative of a raw material widely available in nature.

A technique for producing polyester by esterification of the dicarboxylic acid aromatic heterocyclic compound or the derivative thereof with diols and polycondensation reaction of oligomers obtained thereby has been developed.

The esterification reaction is a coupling reaction between the carboxyl group of a dibasic acid and the OH group of glycol, which takes place under an inert gas atmosphere under normal pressure or pressurized conditions, and water is produced as a by-product (Scheme 1).

(Scheme 1)

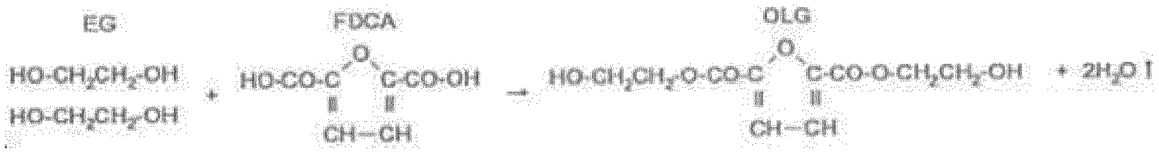

The reaction is promoted by removing the produced water as effluent, and when no effluent is generated, it may be inferred that the esterification reaction is complete. The reaction is also accelerated by adding a polymerization catalyst as needed.

Also, in the polycondensation polymerization reaction, among the oligomers obtained by the above-described esterification reaction under reduced pressure, the terminal glycol of one oligomer is removed and the terminal glycol of the other oligomer is bonded. As a by-product, glycol is produced (Scheme 2), and by distilling and removing this, the reaction is promoted and a degree of polymerization is increased.

(Scheme 2)

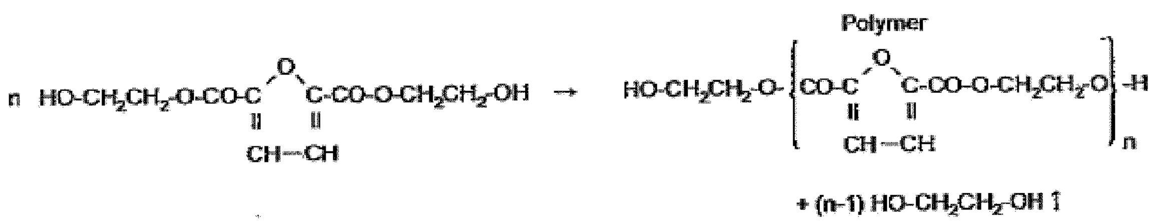

In the condensation polymerization process, coloring may occur due to the formation of double bonds between carbon atoms (Scheme 3). The coloring of the polyester may cause deterioration in appearance, when processed into bottles, films, fibers, and the like. In addition, when used to dye clothes, an appropriate color may be difficult to develop.

(Scheme 3)

$$HO-\{(CH_2)_2OCO(C_6H_4)OC\}_x-O(CH_2)_2OH$$
$$\rightarrow HO-\{(CH_2)_2OCO(C_6H_4)OC\}_y-OH$$
$$+ HO-\{(CH_2)_2OCO(C_6H_4)OC\}_{x-y}-OCH=CH_2$$

When a colored polymer is processed into bottles, films, fibers, and the like, there is a problem of deteriorating appearance thereof. In order to resolve this coloring (hereinafter, referred to as heat discoloration), a technology of adding an additive such as a heat stabilizer at an appropriate moment during the condensation polymerization process has been proposed but has not been developed to satisfy both of the properties of heat discoloration and molecular weight in a trade-off relationship. (Patent Document 1) Chinese Patent No. 103483571

**[Disclosure]**

**[Description of the Drawings]**

**[Technical Problem]**

The present invention is to provide a catalyst for producing polyester having a molecular weight capable of withstanding various molding processes and suppressing coloring of the polyester, a method for producing polyester by using the catalyst, and polyester prepare using the same.

**[Technical Solution]**

According to a first aspect of the present invention, a catalyst for producing polyester including a structure represented by the chemical formula $C_aH_bO_cP_dTi_e$ (a is an integer from 30 to 120, b is an integer from 50 to 250, c is an integer from 5 to 30, d is an integer of 0 to 4, e is an integer of 1 to 2, and $c/e \geq 5$) is provided.

In this case, in the chemical formula $C_aH_bO_cP_dTi_e$, a is an integer from 44 to 100, b is an integer from 98 to 194, c is an integer from 8 to 18, d is an integer from 2 to 4, e is an integer from 1 to 2, and $8 \leq c/e \leq 18$.

The catalyst may include at least one of a -Ti-O-P- bond, a -Ti-P-O- bond, and a -Ti-O- bond.

In addition, the catalyst may include one of structures represented by Chemical Formula 1 to Chemical Formula 3.

[Chemical Formula 1]

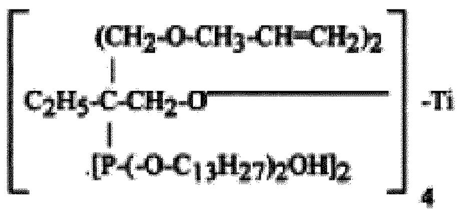

[Chemical Formula 2]

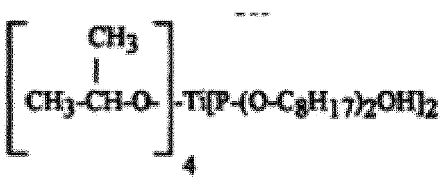

[Chemical Formula 3]

$$(C_8H_{17}\text{-}O\text{-})_4\text{-}Ti.[P\text{-}(O\text{-}C_{13}H_{27})_2OH]_2$$

In addition, the catalyst may have a specific gravity of 0.94 to 0.99 measured at 25 °C.

In addition, the catalyst may be one for producing polyester by polymerizing a dicarboxylic acid aromatic heterocyclic compound or a derivative thereof having a structure represented by Chemical Formula 4 or Chemical Formula 5.

[Chemical Formula 4]

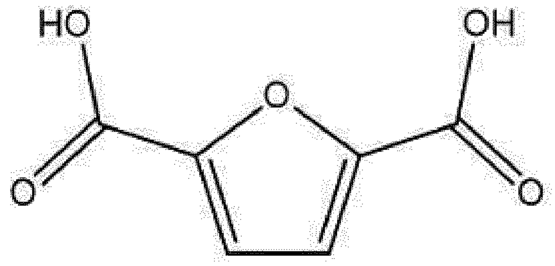

[Chemical Formula 5]

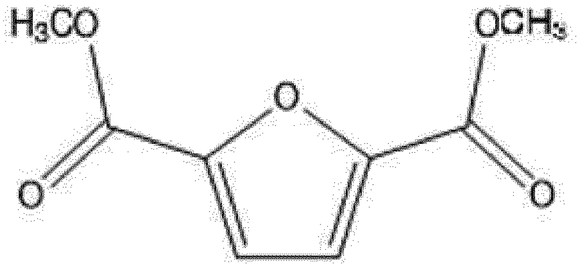

According to a second aspect of the present invention, a method for producing polyester by carrying out an ester reaction of a dicarboxylic acid aromatic heterocyclic compound or a derivative thereof with a raw material for providing alkylene in the presence of a catalyst, followed by a polycondensation reaction, wherein the catalyst is the aforementioned catalyst for producing polyester, and the dicarboxylic acid aromatic heterocyclic compound or the derivative thereof includes a structure represented by Chemical Formula 4 or Chemical Formula 5.

[Chemical Formula 4]

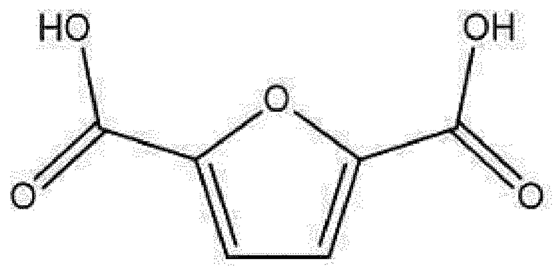

[Chemical Formula 5]

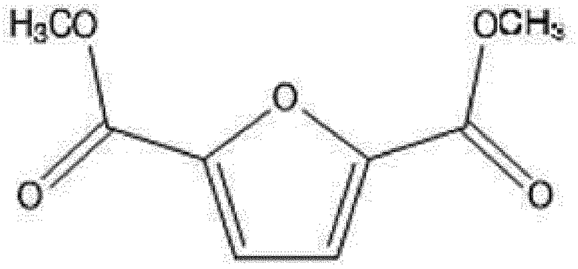

In this case, the raw material for providing alkylene may be an aliphatic diol or an aromatic diol.

In addition, the raw material for providing alkylene may be used in a molar ratio of 1.2 to 3.6 based on 1 mole of the dicarboxylic acid aromatic heterocyclic compound represented by Chemical Formula 4 or Chemical Formula 5 or a derivative thereof.

The esterification reaction may be performed by treating the dicarboxylic acid aromatic heterocyclic compound and the raw material for providing alkylene under a nitrogen atmosphere at 150 to 240 °C and 1 to 6 bar pressure to obtain an ester product of the dicarboxylic acid aromatic heterocyclic compound or the derivative thereof.

The polycondensation reaction may be a polycondensation treatment of the ester product at 230 to 285 °C under reduced pressure.

An amount of the catalyst may be greater than 5 ppm and less than 300 ppm.

According to a third aspect of the present invention, a polyester includes a repeating unit including an ester bond of a dicarboxylic acid aromatic heterocyclic compound or a derivative thereof and a raw material for providing alkylene, wherein a difference (ΔIV) between an intrinsic viscosity measured at 25 °C and an intrinsic viscosity measured at 35 °C is greater than or equal to 0.06, a b value is less than or equal to 12 on a Lab color difference system, and the dicarboxylic acid aromatic heterocyclic compound or the derivative thereof includes a structure represented by Chemical Formula 4 or Chemical Formula 5.

[Chemical Formula 4]

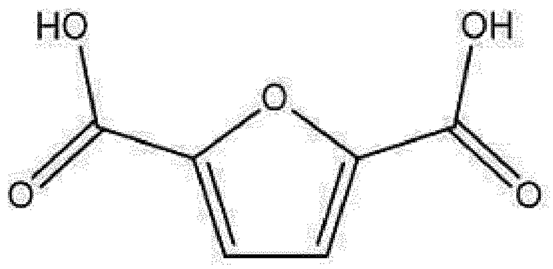

[Chemical Formula 5]

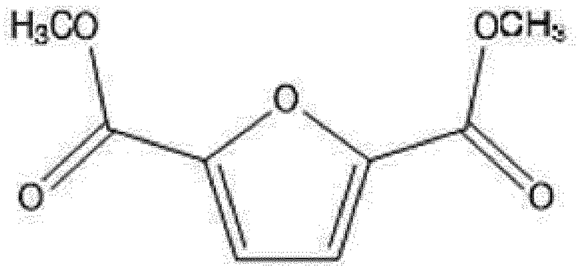

In this case, the raw material for providing alkylene may be an aliphatic diol or an aromatic diol.

The polyester may have an intrinsic viscosity of greater than or equal to 0.5 measured at 25 °C and an intrinsic

viscosity of greater than or equal to 0.43 measured at 35 °C.

After dissolving 2 g of the polyester in 20 ml of hexafluoroisopropanol (HFIP) (0.1 g/ml in HFIP), the b value may be less than 7.12 on a Lab color difference system.

The polyester may have a value of Equation 1 of greater than or equal to 0.5.

[Equation 1]

$$\frac{\Delta IV}{b\ value} \times 100$$

(in Equation 1, ∆IV is a difference between intrinsic viscosity values measured at 25 °C and 35 °C, respectively and the b value is a b value on the Lab color difference system.)

The polyester may have a value of Equation 2 of greater than or equal to 0.4.

[Equation 2]

$$\frac{\Delta IV}{b\ value} \times Tg$$

(in Equation 2, ∆ IV is a difference between intrinsic viscosity values measured at 35 °C and 25 °C, respectively, the b value is a b value in the Lab color difference system, and Tg is a glass transition temperature.)

**[Advantageous Effects]**

A catalyst for producing polyester according to one aspect of the present invention has an effect of providing physical properties of heat discoloration and molecular weight in a trade-off relationship in polyester without adding a heat stabilizer or an antioxidant.

Polyester according to another aspect of the present invention is naturally degraded by microorganism existing in the environment and thus not only eco-friendly but also suitable for replacing conventional PET.

Furthermore, a method of producing the polyester according to still another aspect of the present invention requires no separate reactor for producing PEF and has an advantage of conventionally using a reactor for producing PET as it is.

**[Mode for Invention]**

Hereinafter, a method for producing polyester using a dicarboxylic acid aromatic heterocyclic compound or a derivative thereof of the present invention as a raw material and a catalyst used therein will be described in detail.

Throughout the specification, when a part "includes" a certain component, it means that it may further include other components without excluding other components unless otherwise specified.

<First Aspect of the Present Invention>

A first aspect of the present invention provides a catalyst for producing polyester, which has the chemical formula $C_aH_bO_cP_dTi_e$ (a is an integer of 30 to 120, b is an integer of 50 to 250, c is an integer of 5 to 30, d is an integer of 0 to 4, e is an integer of 1 to 2, and c/e ≥ 5).

In this case, a may be an integer of 44 to 100.

Also, b may be an integer of 98 to 194.

Also, c may be an integer of 8 to 18.

Also, d may be an integer of 2 to 4.

Also, 8 ≤ c/e ≤ 18 may be satisfied.

For example, a catalyst including a -Ti-O-P- bond, a catalyst containing a -Ti-P-O- bond, or a -Ti-O- bond while satisfying the aforementioned a, b, c, d, e, c / e conditions may be used.

As a specific example, it is desirable to use the catalyst including the -Ti-O-P- bond or a catalyst containing a

-Ti-P-O- bond while satisfying the aforementioned conditions a, b, c, d, e, and c/e because a trade-off relationship between heat discoloration and molecular weight can be solved.

The catalyst may include a structure represented by Chemical Formula 1 to Chemical Formula 3, but is not limited thereto.

[Chemical Formula 1]

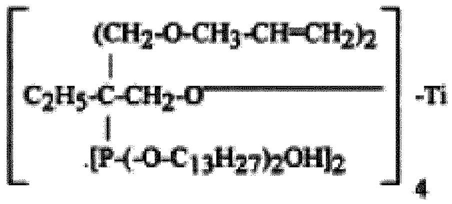

[Chemical Formula 2]

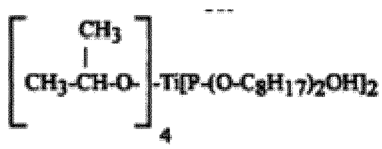

[Chemical Formula 3]

$$(C_8H_{17}-O-)_4-Ti.[P-(O-C_{13}H_{27})_2OH]_2$$

According to an embodiment of the present invention, the catalyst may have a specific gravity of 0.94 to 0.99, or 0.94 to 0.97, measured at 25 °C, and an optimized specific gravity may be provided in the polymerization reaction within the range, which is more desirable in terms of eliminating the trade-off relationship between heat discoloration and molecular weight.

An amount of catalyst used is not particularly limited, but may be used in a content range of, for example, greater than 5 ppm to less than 300 ppm.

In addition, the catalyst may be one for producing polyester by polymerizing a dicarboxylic acid aromatic heterocyclic compound or a derivative thereof having a structure represented by Chemical Formula 4 or Chemical Formula 5:

[Chemical Formula 4]

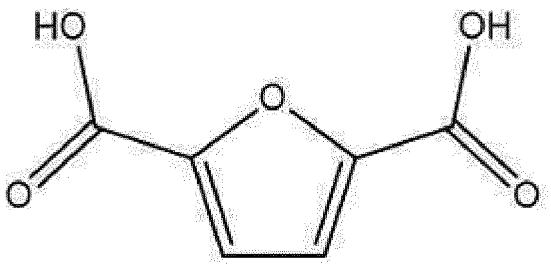

[Chemical Formula 5]

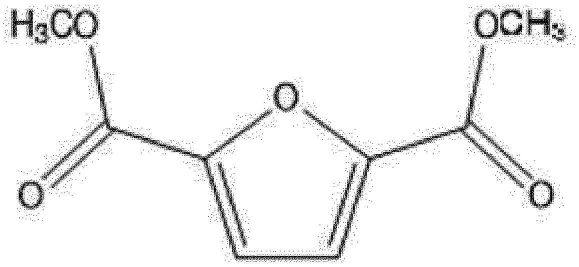

<Second Aspect of the Present Invention>

The method for producing polyester includes esterifying the aforementioned dicarboxylic acid aromatic heterocyclic compound raw material or the derivative thereof with a raw material for providing alkylene in the presence of a catalyst for polyester production to obtain oligomers, and then producing polyester through condensation polymerization between the oligomers.

As described above, the raw material of the present invention may be a dicarboxylic acid aromatic heterocyclic compound having a structure represented by Chemical Formula 4 or Chemical Formula 5, or a derivative thereof.

[Chemical Formula 4]

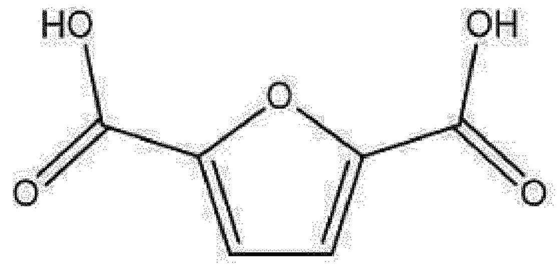

[Chemical Formula 5]

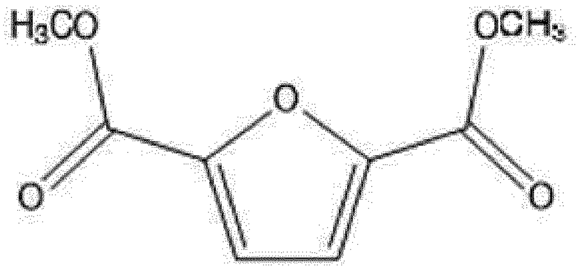

The raw material for providing alkylene may be an aliphatic diol or an aromatic diol, and specific examples may include ethylene glycol, propanediol, butanediol, hexanediol, and octanediol, but are not limited thereto.

The raw material for providing alkylene may be desirably used in a molar ratio of 1.2 to 3.6 or 1.2 to 2.4 based on 1 mole of the dicarboxylic acid aromatic heterocyclic compound represented by Chemical Formula 4 or Chemical Formula 5 or a derivative thereof, thereby producing polyester having a high molecular weight and a low b value.

In addition, the method for producing polyester may include various copolymerization components as needed. For example, isosorbide, 1,4-cyclohexanedimethanol, 2,2,4,4-tetramethyl-1,3-cyclobutanediol, glycerin, etc. may be mentioned, but the present invention is not limited thereto.

According to an embodiment of the present invention, the esterification reaction is a step of obtaining an ester product of the dicarboxylic acid aromatic heterocyclic compound or a derivative thereof by treating the dicarboxylic acid

aromatic hetero compound and the alkylene raw material under a nitrogen atmosphere.

At this time, the reaction temperature may be in the range of 150 to 240 °C, the reaction pressure may be 1 bar to 6 bar, and the reaction may be performed for 1 hr to 6 hr.

It is desirable that the esterification process of the dicarboxylic acid aromatic heterocyclic compound or the derivative thereof may be sufficiently performed under the aforementioned temperature and pressure conditions.

In addition, in the condensation polymerization, polyester as a polycondensation product may be produced by performing the product obtained in the reaction step under reduced pressure conditions and severe temperature conditions.

The reduced pressure conditions herein refer to vacuum conditions unless otherwise specified.

In addition, the temperature condition for the condensation polymerization reaction is not limited as long as it can sufficiently repeat glycol separation-glycol bonding between the resulting oligomers, and may be carried out under conditions of 230 to 285 °C.

The condensation polymerization reaction may be performed for 1 to 24 hr.

In particular, -Ti-P-O- bond or -Ti-O-P- bond is included in the catalyst used for oligomer production in the present invention, so that even if the reaction time is shortened under severe high temperature conditions of condensation polymerization reaction, polyester having an increased molecular weight and stability to heat discoloration may be produced.

<Third Aspect of the Present Invention>

A third aspect of the present invention provides polyester produced by the production method according to the second aspect using the catalyst for producing polyester according to the first aspect.

The polyester may include a repeating unit derived from the dicarboxylic acid aromatic heterocyclic compound or the derivative thereof, and specifically a repeating unit including an ester bond of a dicarboxylic acid aromatic heterocyclic compound or a derivative thereof and a raw material for providing alkylene.

The dicarboxylic acid aromatic heterocyclic compound or the derivative thereof may include a structure represented by Chemical Formula 4 or Chemical Formula 5.

[Chemical Formula 4]

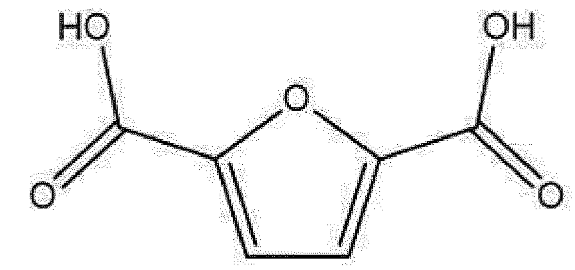

[Chemical Formula 5]

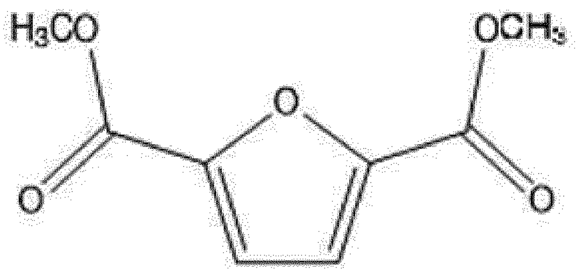

The raw material for providing alkylene may be an aliphatic diol or an aromatic diol, and specific examples may include ethylene glycol, propanediol, butanediol, hexanediol, and octanediol, but are not limited thereto.

The polyester may have a difference (ΔIV) between an intrinsic viscosity measured at 25 °C and an intrinsic viscosity measured at 35 °C of greater than or equal to 0.06, for example, greater than or equal to 0.59, or greater than or equal to 0.68.

At the same time, the polyester may have a b value of less than or equal to 12, or for example, less than 14.5 in the Lab color difference system.

That is, the polyester has a ΔIV value compared to b value higher than that of general polyester. In general, the higher molecular weight of polyester obtained through the condensation polymerization process, the higher a color value (b value) due to the heat discoloration, but the polyester, which is produced by using the catalyst, may be, although Δ IV is high, obtained as a polymer with a large molecular weight without heat discoloration due to a low color value (b value).

Herein, the polyester has intrinsic viscosity, when measured at 25 °C, in a range of 0.5 or more, for example, 0.59 or more and 0.68 or less and when measured at 35 °C, in a range of 0.43 or more and 0.512 or less.

In addition, the polyester may have a b value of less than 7.12 in a solution state on a Lab color difference system, for example, less than or equal to 6.12 and greater than or equal to 0.501. The b value In a solution state on a Lab color difference system may be, for example, measured by dissolving 2 g of the polyester in 20 ml of hexafluoroisopropanol (HFIP) (0.1 g/ml in HFIP) and using CM-3700A manufactured by Konica Minolta Inc. on a Tuartz cell dedicated for measuring the Lab color difference system in a solution sate.

The polyester may have a value of Equation 1 of greater than or equal to 0.5, for example, greater than or equal to 1.0 and less than or equal to 1.5.

[Equation 1]

$$\frac{\Delta IV}{b\ value} \times 100$$

In Equation 1, ΔIV is a difference between intrinsic viscosity values measured at 25 °C and 35 °C, respectively, and the b value is a b value on the Lab color difference system.

In addition, the polyester may have a value of Equation 2 of greater than or equal to 0.4, for example greater than or equal to 0.6 and less than or equal to 1.21.

[Equation 2]

$$\frac{\Delta IV}{b\ value} \times Tg$$

In Equation 2 Δ IV is a difference between intrinsic viscosity values measured at 35 °C and 25 °C, respectively, the b value is a b value onn the Lab color difference system, and Tg is a glass transition temperature.

In other words, the polyester has a correlationship calculation value (Equation 2) of the difference (Δ IV) between intrinsic viscosity values measured at 25 °C and 35 °C under a normal pressure with the b value of a chip state color purity and the glass transition temperature in a range of 0.4 or more, which shows the Δ IV to b, Tg are higher than general polyester. In general, the higher molecular weight of polyester obtained through the condensation polymerization process, the higher a color value (b value) due to the heat discoloration, but as the polyester is produced by using the catalyst, the color value (b) is low despite high Δ IV, obtaining a polymer having a large molecular weight without heat discoloration.

In addition, the COOH terminal end group of the polyester may be within the range of 10 to 12 meq/kg.

Also, a moisture content of the polyester may be in the range of 7067 to 7947 ppm.

In addition, a glass transition temperature (Tg) of the polyester may be within the range of 84.7 to 86 °C.

<Fourth Aspect of the Present Invention>

A fourth aspect of the present invention provides an apparatus for producing polyester by polymerizing a dicarboxylic acid aromatic heterocyclic compound or a derivative thereof using an alkylene raw material in the presence of a catalyst.

The apparatus of the fourth aspect includes a reactor, a storage tank of the dicarboxylic acid aromatic heterocyclic compound or the derivative thereof as a raw material, and a supply device of the alkylene raw material. Herein, the reactor may be a cylinder-type column reactor filled with a carrier on which an active catalyst is supported but is not limited thereto.

In addition, the supply device of the raw material for providing alkylene has a structure of being connected to a pipe connecting the storage tank of the dicarboxylic acid aromatic heterocyclic compound or the derivative thereof and the reactor to feed the raw material in a pressurized state into the reactor.

This layout structure of the supply device of the raw material for providing alkylene is to transfer the raw material in a pressurized state into the reactor, which is advantageous in increase an activation degree of a reaction by the raw material without separately or additionally controlling a pressurization condition in the reactor.

The reactor may be controlled to have a pressure of 1 to 6 atm by the alkylene raw material supplied though the supply device of a raw material for providing alkylene and also, controlled to have a temperature of 40 °C to 260 °C.

The alkylene raw material may be the same as above and will not be specifically illustrated again.

Herein, the raw material of the dicarboxylic acid aromatic heterocyclic compound or the derivative thereof may include a structure represented by Chemical Formula 4 or Chemical Formula 5.

The cylinder type column reactor may be internally filled with the aforementioned catalyst. Since the catalyst is the same as described above, a detailed description thereof will be omitted.

Gaseous polyester discharged from the reactor is separated in a purification reactor or a crystallization reactor, and a polyester collector may be included at the bottom of the purification reactor or the crystallization reactor.

The reactor may include a first polymerization reactor and a second polymerization reactor, wherein the first polymerization reactor is used as a reactor for an esterification reaction, and the second oxidation reactor is used as a reactor for a condensation polymerization.

If necessary, the reactor may include the first polymerization reactor for a primary esterification reaction and a secondary esterification reaction and the second polymerization reactor for the condensation polymerization reaction.

For example, a solution produced by dissolving the dicarboxylic acid aromatic heterocyclic compound or the derivative thereof in the raw material for providing alkylene is supplied by a pressure difference between the reactor and the storage tank for the raw material of the dicarboxylic acid aromatic heterocyclic compound or the derivative thereof, and a flow rate thereof is controlled by using a valve to adjust reaction time (stay time).

In addition, the solution completed with a reaction by passing through a column (for example, a cylinder type column) fixedly filled with the catalyst as the reactor is transported to a post process reactor and stored in a collection container through a purification and/or crystallization process.

The polyester conversion solution stored in the collection container is discharged from the bottom to separate the catalyst and the polyester and then, recover the polyester as a reaction product.

The dicarboxylic acid aromatic heterocyclic compound or the derivative thereof as a raw material may be supplied from the top of the reactor to maximize a reaction rate, but the supply location is not limited thereto.

In the reactor, the solution of the dicarboxylic acid aromatic heterocyclic compound or the derivative thereof as a raw material is brought into contact with the fixed catalyst under an inert atmosphere and thus had an esterification reaction, wherein a liquid mass feeder and the control valve equipped at the upper end of the reactor plays a role of controlling a content and the like of the solution of the dicarboxylic acid aromatic heterocyclic compound or the derivative thereof, which is automatically or semi-automatically introduced into the reactor.

In addition, in the storage tank of the dicarboxylic acid aromatic heterocyclic compound or the derivative thereof as a raw material, the dicarboxylic acid aromatic heterocyclic compound or the derivative thereof is dissolved in the raw material for providing alkylene for example, at a concentration of 0.5 wt% to 10.0 wt% or 0.5 wt% to 5.0 wt% and then, filled as a solution, or the dicarboxylic acid aromatic heterocyclic compound or a derivative thereof may be filled alone.

When the dicarboxylic acid aromatic heterocyclic compound or the derivative thereof alone is filled, the raw material for providing alkylene supplied from a tank for supplying a raw material for providing alkylene may be supplied to a pipe connecting the storage tank of the dicarboxylic acid aromatic heterocyclic compound or the derivative thereof to the reactor to meet the aforementioned concentration.

The catalyst filled in the reactor may be a catalyst including the catalyst according to the first aspect.

Specifically, the aforementioned catalyst is filled in a vertically installed tubular reactor. Herein, when the esterification reactor and the polycondensation reactor are present, the corresponding catalyst is filled into the tubular reactor, which is the esterification reactor.

After the charging the catalyst, the reactor is maintained under vacuum at 100 to 500 °C to remove adsorbed impurities.

The reactor (corresponding to the column filled with the catalyst) is controlled to have a pressure 1 to 10 bar, wherein the reaction rate decreases in a range of 1 bar or less but insignificantly increases in a range of 10 bar or higher. Accordingly, the pressure is optimal in a range of 2 to 4 bar.

In addition, a reaction temperature of the reactor may be in a range of 40 °C to 260 °C. At 40 °C or less, the

reaction rate is slow, but at 260 °C or higher, adsorption on the catalyst surface decreases, which deteriorate reactivity. An optimal temperature condition is 40 to 250 °C.

The liquid mass feeder at the top of the reactor (the column filled with the catalyst) is used to supply the solution in which the dicarboxylic acid aromatic heterocyclic compound or the derivative thereof is dissolved. The supplied solution of the dicarboxylic acid aromatic heterocyclic compound or the derivative thereof flows to the bottom of the reactor by gravity and has an esterification reaction with the catalyst.

A product from the esterification reaction may be separated from the unreacted raw material for providing alkylene in a method typically used to manufacture chemical products.

In addition, the reaction product is vacuum-treated, while heated under a specific temperature condition, to volatize the excess unreacted raw material for providing alkylene and recover a high-purity product.

Accordingly, the method of the present invention uses a raw material and a catalyst, which are optimal for providing a desired product, to carry out a reaction under appropriate conditions and thus may effectively resolve the trade-off relationship between heat discoloration and molecular weight without separately adding an additive such as a heat stabilizer or an antioxidant and provide a desired reaction product.

Hereinafter, it will be described with reference to examples of the present invention, but the following examples were performed under limited reaction times and conditions to illustrate the present invention, and the scope of the present invention is not limited only to these.

<Examples>

<Examples 1-1 to 1-6 and Comparative Example 1-1>

In a 2 L autoclave reactor, a catalyst including a structure shown in Table 1 (Sigma Aldrich Co., Ltd.) was put by each content, and 428 g of a dicarboxylic acid aromatic heterocyclic compound represented by Chemical Formula 4 or a derivative thereof (Sigma Aldrich Co., Ltd.) and 283 g of ethylene glycol (Sigma Aldrich Co., Ltd.) were added thereto under a nitrogen atmosphere at 150 °C to 240 °C with a pressure of 1 to 6 bars to conduct an esterification reaction.

[Chemical Formula 4]

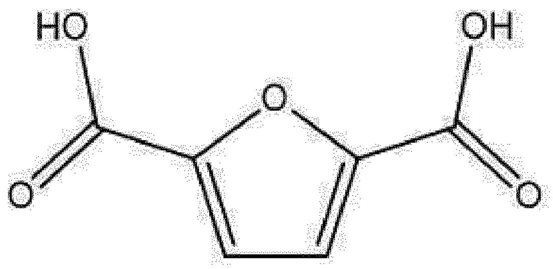

Time and a theoretical effluent content according to an amount of the catalyst were checked.

Subsequently, after completing the esterification reaction by applying a pressure to a normal pressure, a condensation polymerization reaction was started under vacuum at 230 to 285 °C and continuously conducted for 5 hr, obtaining polyester.

(Table 1)

| | Exam pl e 1-1 | Exampl e 1-2 | Exam pl e 1-3 | Exampl e 1-4 | Comparative Example1-1 | Exam pl e 1-5 | Exampl e 1-6 |
|---|---|---|---|---|---|---|---|
| Amount of catalyst (ppm) | 10 | 50 | 150 | 200 | 0 | 300 | 300 |
| Catalyst | Catalys t 1 | Catalys t 1 | Catalys t 2 | Catalyst 3 | Catalyst 1 | Catalyst 2 | Catalys t3 |

(continued)

| | Example 1-1 | Example 1-2 | Example 1-3 | Example 1-4 | Comparative Example1-1 | Example 1-5 | Example 1-6 |
|---|---|---|---|---|---|---|---|
| Catalyst structural formula | <Catalyst 1> chemical formula $C_{100}H_{194}O_{18}P_2Ti_1$ (c/e=18)<br>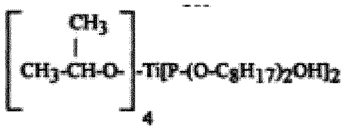<br>(catalyst specific gravity 25 °C: 0.97) | | | | | | |
| | <Catalyst 2> chemical formula $C_{44}H_{98}O_{11}P_2Ti_1$ (c/e=11)<br>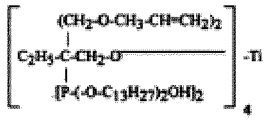 (catalyst specific gravity 25 °C: 0.94)<br><Catalyst 3> chemical formula $C_{50}H_{126}O_8P_2Ti_1$ (c/e=8)<br>**$(C_8H_{17}\text{-}O)_4\text{-}Ti.[P\text{-}(O\text{-}C_{13}H_{27})_2OH]_2$**<br>(catalyst specific gravity 25 °C: 0.94) | | | | | | |

<Comparative Examples 1-2 and 1-3>

In Comparative Example 1-2, a catalyst including a structure shown in Table 2 (Sigma Aldrich Co., Ltd.) by each content was put in a 2 L autoclave reactor, and 428 g of a dicarboxylic acid aromatic heterocyclic compound represented by above Chemical Formula 4 or a derivative thereof and 283 g of ethylene glycol were added thereto under a nitrogen atmosphere at 150 °C to 240 °C with a pressure of 1 to 6 bars to conduct an esterification reaction.

In addition, in Comparative Example 1-3, a catalyst including a structure shown in Table 2 (Sigma Aldrich Co., Ltd.) by each content was put in a 2 L autoclave reactor, and 428 g of a dicarboxylic acid aromatic heterocyclic compound represented by Chemical Formula 4 or a derivative thereof and 283 g of ethylene glycol were added thereto under a nitrogen atmosphere at 150 °C to 240 °C with a pressure of 1 to 6 bard to conduct an esterification reaction.

Time and a theoretical effluent content according to an amount of the catalyst were checked.

Subsequently, after completing the esterification reaction by applying a pressure to a normal pressure and adding a heat stabilizer shown in Table 2 (TEP, triethylphosphate, Sigma-Aldrich Co., Ltd.) thereto, a condensation polymerization reaction was started under vacuum at 230 to 285 °C and continuously conducted for 5 hr, obtaining polyester.

Time and a theoretical effluent content according to an amount of the catalyst were checked.

Subsequently, after completing the esterification reaction by applying a pressure to a normal pressure, a condensation polymerization reaction was started under vacuum at 230 to 285 °C and continuously conducted for 5 hr, obtaining polyester.

(Table 2)

| | Comparative Example 1-2 | Comparative Example 1-3 |
|---|---|---|
| Amount of catalyst (ppm) | 10 | 100 |
| Catalyst | Catalyst 4 | Catalyst 4 |
| Amount of heat stabilizer (ppm) | - | 100 |
| Heat stabilizer | - | Triethylphosphate |

(continued)

| | Comparative Example 1-2 | Comparative Example 1-3 |
|---|---|---|
| Catalyst structural formula | <Catalyst 4><br>chemical formula $C_{16}H_{36}O_4P_0Ti_1$ (c/e=4)<br>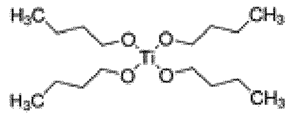<br>(catalyst specific gravity 25 °C: 1.0)<br><heat stabilizer> Product name: Tyzor TBT | |

<Evaluation of Properties>

Tg Measurement: Tg was measured by using DSC made by TA Instruments under N2 at 20 psi at 20 °C/min from room temperature to 300 °C.

2) L/a/b Measurement: L/a/b was measured by using a chip colorimeter made by Nippon Denshoku Industries Co., Ltd. (sa-4000).
3) IV Measurement: 2 g of a sample was dissolved in 25 ml of a mixed solvent of phenol/tetrachloroethane and then, measured with respect to IV by using an Oswald viscometer.
4) DEG Content Measurement: measured by using a column Rtx-5MS (0.25 μ m x 0.25 mm x 30 m) and GC-MS made by Agilent Technologies, Inc and then, expressed in a unit of %.
5) Measurement of Content of COOH Group at Terminal End: pretreated at 100 °C with a product made by Metrohm, Inc., analyzed at room temperature, and expressed in a unit meq/kg.
6) Moisture Content Measurement: heated to 160 °C with a product made by Metrohm, Inc. and expressed in a unit of ppm.

<Experimental Example1>

The polyesters according to Examples 1-1 to 1-6 and Comparative Examples 1-1 to 1-3 were measured with respect to Tg, L/a/b, IV, a DEG content, a content of a COOH group at the terminal end, and a moisture content, and the results are shown in Table 3.

(Table 3)

| | IV | Color difference system | | | Tg | DEG | COOH | Moisture |
|---|---|---|---|---|---|---|---|---|
| | (25 °C) | L | a | b | (°C) | (%) | (meq/kg) | (ppm) |
| Example 1-1 | 0.591 | 47.1 | 1.7 | 10.7 | 85.6 | 2.23 | 11 | 7123 |
| Example 1-2 | 0.612 | 47.5 | 1.7 | 10.8 | 85.7 | 1.59 | 12 | 7301 |
| Example 1-3 | 0.620 | 45.1 | 1.8 | 11.5 | 85.1 | 1.47 | 10 | 7486 |
| Example 1-4 | 0.680 | 45.7 | 1.8 | 11.8 | 84.9 | 1.78 | 11 | 7454 |
| Comparative Example 1-1 | 0.342 | 41.9 | 3.2 | 31.5 | 69.1 | 1.89 | 21 | - |
| Example 1-5 | 0.665 | 42.1 | 2.5 | 24.1 | 86.5 | 3.12 | 13 | 7613 |
| Example 1-6 | 0.692 | 44.1 | 2.1 | 30.1 | 85.1 | 3.12 | 13 | 7842 |
| Comparative Example 1-2 | 0.620 | 41.1 | 2.5 | 28.1 | 84.1 | 4.01 | 13 | 7104 |
| Comparative Example 1-3 | 0.500 | 47.5 | 1.6 | 14.8 | 84.0 | 2.47 | 13 | 7184 |

As shown in Table 3, according to Examples 1-1 to 1-4 using a catalyst represented by Chemical Formula 1 and having c/e of 18 and viscosity at 25 °C of 0.97, a catalyst represented by Chemical Formula 2 and having c/e of 11 and viscosity at 25 °C of 0.94, or a catalyst represented by Chemical Formula 3 and having c/e of 8 and viscosity at 25 °C of 0.94 in an appropriate amount of greater than 5 ppm to less than 300 ppm, the obtained polyesters exhibited

intrinsic viscosity (IV) of 0.591 to 0.680, L measured with colorimeter of 45.1 to 47.5, and in addition, a of 1.7 to 1.8, and b of 10.7 to 11.8, which confirmed that the trade-off problem between molecular weight and heat discoloration was resolved.

In addition, the polyester had Tg of 84.9 °C to 85.7 °C, DEG of 1.47% to 2.23%, a COOH terminal end group of 10 to 12 meq/kg, and a moisture content of 7123 to 7486 ppm.

On the other hand, Comparative Example 1-1, to which the catalyst was not added, that is, in an amount of 0 ppm, had no condensation polymerization and an oligomer molecular weight level, which is a low molecular weight in the condensation polymerization process, and thus exhibited heat discoloration due to the low molecular weight. On the other hand, Example 1-5 or 1-6, to which the catalyst was added in an excessive amount of 300 ppmm, exhibited each improved intrinsic viscosity (IV) of 0.665 and 0.692 but insufficient results in terms of color such as L, a, b, and the like.

Resultantly, a case of using a catalyst including a structure of Chemical Formula 1 in a range of greater than 5 ppm to less than 300 ppm turned out to resolve the trade-off problem of molecular weight and heat discoloration.

Furthermore, according to Comparative Example 1-2 using a catalyst represented by Chemical Formula 4 and having c/e of 4 and specific gravity at 25 °C of 1.0 in an appropriate amount of greater than 5 ppm to less than 300 ppm, the obtained polyester exhibited intrinsic viscosity (IV) of 0.62, which was relatively lower than that of the examples and insufficient results in terms of a color such as L, a, b, and the like.

Resultantly, the catalyst including a structure of Chemical Formula 4 turned out to be unsuitable, even though used with the appropriate range.

In addition, according to Comparative Example 1-3 in which a heat stabilizer was additionally added in the condensation polymerization process to Comparative Example 1-2 using a catalyst represented by Chemical Formula 4 and having c/e of 4 and specific gravity at 25 °C of 1.0 within a range of greater than 5 ppm to less than 300 ppm, the obtained polyester exhibited intrinsic viscosity (IV) of 0.50, which was relatively lower than that of the examples, but the color values were significantly improved by the addition of the heat stabilizer.

Resultantly, A catalyst including the structure of Chemical Formula 4 should be used with an additive such as the heat stabilizer and the like in the condensation polymerization process to prevent heat discoloration.

<Experimental Example 2>

The polyesters according to Examples 1-1 to 1-6 and Comparative Examples 1-1 to 1-3 were measured with respect to IV (25 °C), IV (35 °C), a chip state color difference system (L/a/b), a solution state color difference system (L/a/b), and Tg, and the results are shown in Table 4.

In addition, an intrinsic viscosity difference (Δ IV) at 25 °C and 35 °C is shown along with each calculation value according to Equations 1 and 2 in Table 4.

[Equation 1]

$$\frac{\Delta IV}{b\ value} \times 100$$

[Equation 2]

$$\frac{\Delta IV}{b\ value} \times Tg$$

(Table 4)

| | IV | | | Chip color difference system | | | Solution color difference system | | | Tg | Equation1 calculation value | Equation2 calculation value |
|---|---|---|---|---|---|---|---|---|---|---|---|---|
| | IV (25 °C) | IV (35 °C) | ∆ IV | L | a | b | L | a | b | | | |
| Ex. 1-1 | 0.591 | 0.476 | 0.115 | 47.1 | 1.7 | 10.7 | 95.31 | -0.48 | 5.01 | 85.6 | 1.07 | 0.92 |
| Ex. 1-2 | 0.612 | 0.484 | 0.128 | 47.5 | 1.7 | 10.8 | 95.49 | -0.29 | 5.1 | 85.7 | 1.19 | 1.02 |
| Ex. 1-3 | 0.62 | 0.488 | 0.132 | 45.1 | 1.8 | 11.5 | 93.02 | -0.24 | 6.12 | 85.1 | 1.15 | 0.98 |
| Ex. 1-4 | 0.68 | 0.512 | 0.168 | 45.7 | 1.8 | 11.8 | 93.45 | -0.2 | 6.07 | 84.9 | 1.42 | 1.21 |
| Comp. Ex. 1-1 | 0.342 | 0.371 | 0.042 | 41.9 | 3.2 | 31.5 | 90.89 | 2.1 | 14.19 | 69.1 | 0.13 | 0.09 |
| Ex. 1-5 | 0.665 | 0.506 | 0.159 | 42.1 | 2.5 | 24.1 | 91.8 | 1.3 | 12.12 | 86.5 | 0.66 | 0.57 |
| Ex. 1-6 | 0.692 | 0.517 | 0.175 | 44.1 | 2.1 | 30.1 | 93.12 | 1.21 | 13.16 | 85.1 | 0.58 | 0.49 |
| Comp. Ex. 1-2 | 0.62 | 0.488 | 0.132 | 41.1 | 2.5 | 28.1 | 90.35 | 1.36 | 12.9 | 84.1 | 0.47 | 0.40 |
| Comp. Ex. 1-3 | 0.5 | 0.438 | 0.062 | 47.5 | 1.6 | 14.8 | 95.89 | -0.51 | 7.9 | 84 | 0.42 | 0.35 |

1) A solution state color difference system measurement method: 2 g of the synthesized polyester was dissolved in 20 ml of hexafluoroisopropanol (HFIP) (0.1 g/ml in HFIP) and then, measured with respect to solution state Lab color difference system in a Tuartz cell dedicated for solution color difference system measurement by using CM-3700A manufactured by Konica Minolta Co.

Referring to the results of Table 4, the polyesters according to the examples exhibited a correlationship calculation value (Equation 1) of an intrinsic viscosity difference ( ∆ IV) at 25 °C and 35 °C under a normal pressure and the chip state color purity (b value) in a range of greater than or equal to 0.06, a chip state b value of less than or equal to 12, a solution state b value of less than 7.12, which confirmed that ∆ IV to b was higher than that of the comparative examples. In general, the higher molecular weight of the polyester obtained through the condensation polymerization process, the higher the color value (b value) due to the heat discoloration, but the examples exhibited higher ∆ IV than the comparative examples but a low color value (b value), which confirmed that the trade-off relationship was resolved, obtaining a polymer having no heat discoloration and a larger molecular weight.

On the contrary, the polyesters according to the comparative examples exhibited a correlationship calculation value (Equation 1) of an intrinsic viscosity difference ( ∆ IV) at 25 °C and 35 °C with chip state color purity (b) in a range of less than 0.5, which confirmed a general tendency that the higher molecular weight of the polyester obtained through the condensation polymerization process, the higher the color value (b).

In addition, referring to the results of Table 4, the polyesters according to the examples exhibited a correlationship calculation value (Equation 2) of an intrinsic viscosity difference ( ∆ IV) at 25 °C and 35 °C under a normal pressure with chip state color purity (b) and a glass transition temperature in a range of greater than or equal to 0.4, which confirmed that ∆ IV to b and Tg were higher than that of the comparative examples. In general, the higher molecular weight ( ∆ IV) of the polyester obtained through the condensation polymerization process, the higher color value (b) due to heat discoloration, but the examples obtained polyester having higher ∆ IV than that of the comparative examples but low color purity (b) and thus resolved the trade-off relationship.

The features, structures, effects, etc. illustrated in each of the aforementioned embodiments can be combined or modified with respect to other embodiments by those skilled in the art in the field to which the embodiments belong. Therefore, contents related to these combinations and variations should be construed as being included in the scope

of the present invention.

**[Industrial Applicability]**

The present invention relates to a novel catalyst material used to prepare polyester from a dicarboxylic acid aromatic heterocyclic compound or a derivative thereof to prepare polyester, a method for producing the polyester, and polyester produced thereby, wherein the catalyst for producing polyester has an effect of providing a property in a trade-off relationship between heat discoloration and molecular weight without adding a heat stabilizer or an antioxidant.

## Claims

1. A catalyst for producing polyester, comprising
a structure represented by the chemical formula $C_aH_bO_cP_dTi_e$ wherein a is an integer of 30 to 120, b is an integer of 50 to 250, c is an integer of 5 to 30, d is an integer of 0 to 4, e is an integer of 1 to 2, and c/e≥5.

2. The catalyst for producing polyester of claim 1, wherein
in the chemical formula $C_aH_bO_cP_dTi_e$, a is an integer from 44 to 100, b is an integer from 98 to 194, c is an integer from 8 to 18, d is an integer from 2 to 4, e is an integer from 1 to 2, and 8≤c/e≤18.

3. The catalyst for producing polyester of claim 1, wherein
the catalyst includes at least one of a -Ti-O-P- bond, a -Ti-P-O- bond, and a -Ti-O- bond.

4. The catalyst for producing polyester of claim 1, wherein
the catalyst includes one of structures represented by Chemical Formula 1 to Chemical Formula 3:

[Chemical Formula 1]

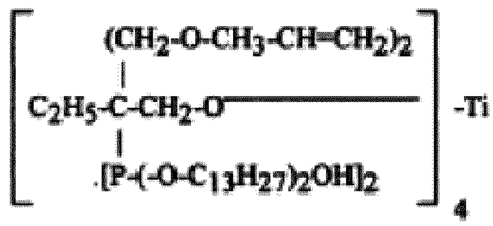

[Chemical Formula 2]

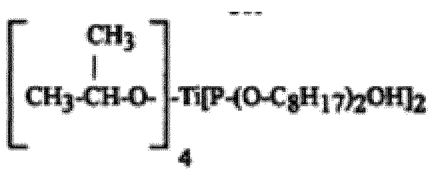

[Chemical Formula 3]

$(C_8H_{17}-O-)_4-Ti.[P-(O-C_{13}H_{27})_2OH]_2$

5. The catalyst for producing polyester of claim 1, wherein
the catalyst has a specific gravity of 0.94 to 0.99 measured at 25 °C.

6. The catalyst for producing polyester of claim 1, wherein

the catalyst is one for producing polyester by polymerizing a dicarboxylic acid aromatic heterocyclic compound or a derivative thereof having a structure represented by Chemical Formula 4 or Chemical Formula 5:

[Chemical Formula 4]

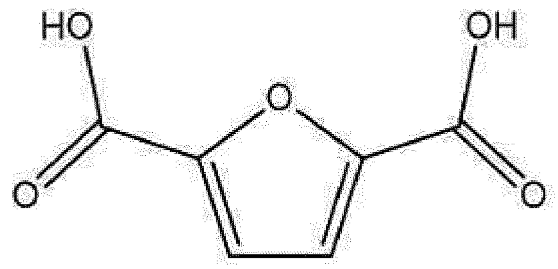

[Chemical Formula 5]

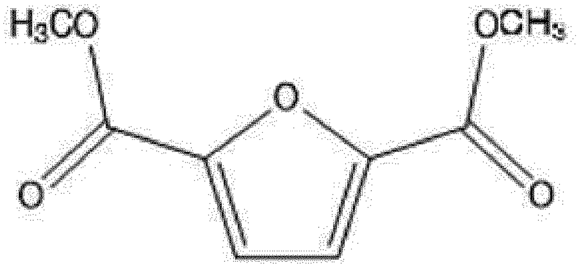

.

**7.** A method for producing polyester by carrying out an ester reaction of a dicarboxylic acid aromatic heterocyclic compound or a derivative thereof with a raw material for providing alkylene in the presence of a catalyst, followed by a polycondensation reaction,

wherein the catalyst is the catalyst for producing polyester of any one of claim 1 to claim 6, and
the dicarboxylic acid aromatic heterocyclic compound or the derivative thereof includes a structure represented by Chemical Formula 4 or Chemical Formula 5:

[Chemical Formula 4]

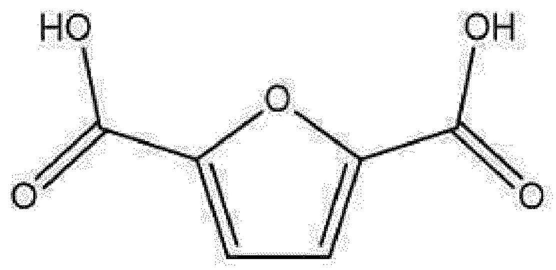

[Chemical Formula 5]

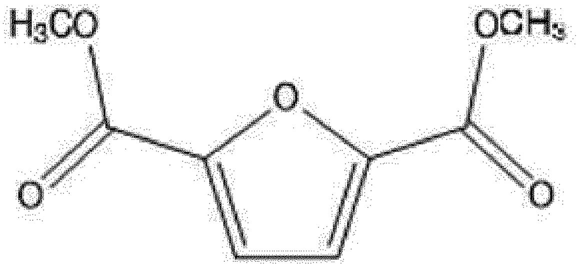

8. The method for producing polyester of claim 7, wherein the raw material for providing alkylene is aliphatic diol or aromatic diol.

9. The method for producing polyester of claim 7, wherein the raw material for providing alkylene is used in a molar ratio of 1.2 to 3.6 based on 1 mole of the dicarboxylic acid aromatic heterocyclic compound represented by Chemical Formula 4 or Chemical Formula 5 or a derivative thereof.

10. The method for producing polyester of claim 7, wherein the esterification reaction is performed by treating the dicarboxylic acid aromatic heterocyclic compound and the raw material for providing alkylene under a nitrogen atmosphere at 150 to 240 °C and 1 to 6 bar pressure to obtain an ester product of the dicarboxylic acid aromatic heterocyclic compound or the derivative thereof.

11. The method for producing polyester of claim 7, wherein the polycondensation reaction is a polycondensation treatment of the ester product at 230 to 285 °C under reduced pressure.

12. The method for producing polyester of claim 7, wherein an amount of the catalyst is greater than 5 ppm and less than 300 ppm.

13. A polyester, comprising

a repeating unit including an ester bond of a dicarboxylic acid aromatic heterocyclic compound or a derivative thereof and a raw material for providing alkylene,
a difference (ΔIV) between an intrinsic viscosity measured at 25 °C and an intrinsic viscosity measured at 35 °C is greater than or equal to 0.06,
a b value is less than or equal to 12 on a Lab color difference system, and
the dicarboxylic acid aromatic heterocyclic compound or the derivative thereof includes a structure represented by Chemical Formula 4 or Chemical Formula 5:

[Chemical Formula 4]

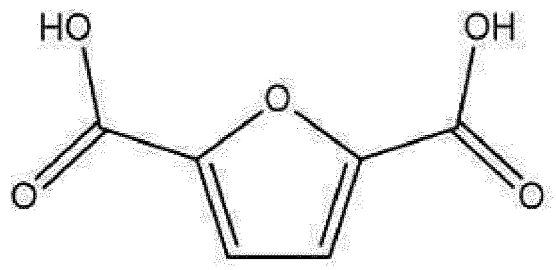

[Chemical Formula 5]

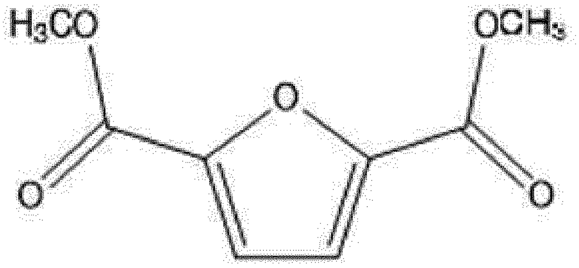

.

**14.** The polyester of claim 13, wherein the raw material for providing alkylene is aliphatic diol or aromatic diol.

**15.** The polyester of claim 13, wherein

an intrinsic viscosity measured at 25 °C is greater than or equal to 0.5, and
an intrinsic viscosity measured at 35 °C is greater than or equal to 0.43.

**16.** The polyester of claim 13, wherein after dissolving 2 g of the polyester in 20 ml of hexafluoroisopropanol (HFIP) (0.1 g/ml in HFIP), the b value is less than 7.12 on a Lab color difference system.

**17.** The polyester of claim 13, wherein a value of Equation 1 is greater than or equal to 0.5:

[Equation 1]

$$\frac{\Delta IV}{b\ value} \times 100$$

wherein, in Equation 1, ΔIV is the difference between intrinsic viscosity values measured at 25 °C and 35 °C, and the b value is a b value on the Lab color difference system.

**18.** The polyester of claim 13, wherein a value of Equation 2 is greater than or equal to 0.4:

[Equation 2]

$$\frac{\Delta IV}{b\ value} \times Tg$$

wherein, in Equation 2, Δ IV is a difference between intrinsic viscosity values measured at 35 °C and 25 °C, respectively, the b value is a b value in the Lab color difference system, and Tg is a glass transition temperature.

## INTERNATIONAL SEARCH REPORT

International application No.
**PCT/KR2021/012442**

**A. CLASSIFICATION OF SUBJECT MATTER**

**C08G 63/85**(2006.01)i; **C08G 63/16**(2006.01)i

According to International Patent Classification (IPC) or to both national classification and IPC

**B. FIELDS SEARCHED**

Minimum documentation searched (classification system followed by classification symbols)

C08G 63/85(2006.01); B41M 5/26(2006.01); B41M 5/30(2006.01); C08F 4/60(2006.01); C08G 63/672(2006.01); C08G 63/78(2006.01); C08G 63/84(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 폴리에스테르(polyester), 촉매(catalyst), 2,5-퓨란디카르복실산(2,5-furandicarboxylic acid), 에틸렌 글리콜(ethylene glycol)

**C. DOCUMENTS CONSIDERED TO BE RELEVANT**

| Category* | Citation of document, with indication, where appropriate, of the relevant passages | Relevant to claim No. |
|---|---|---|
| X<br>Y | US 5714570 A (KIM, C. Y. et al.) 03 February 1998 (1998-02-03)<br>See claims 1, 26 and 27; and columns 7 and 8. | 1-5<br>6-18 |
| Y | CN 108659209 A (ZHEJIANG UNIVERSITY) 16 October 2018 (2018-10-16)<br>See claims 1 and 3; and paragraphs [0047] and [0057]-[0059]. | 6-18 |
| A | JP 2008-133407 A (DIC CORP.) 12 June 2008 (2008-06-12)<br>See claims 1-7. | 1-18 |
| A | CN 108503809 A (CHANGCHUN INST. OF APPLIED CHEMISTRY, CHINESE ACADEMY OF SCIENCES) 07 September 2018 (2018-09-07)<br>See entire document. | 1-18 |

☑ Further documents are listed in the continuation of Box C. ☑ See patent family annex.

* Special categories of cited documents:
- "A" document defining the general state of the art which is not considered to be of particular relevance
- "D" document cited by the applicant in the international application
- "E" earlier application or patent but published on or after the international filing date
- "L" document which may throw doubts on priority claim(s) or which is cited to establish the publication date of another citation or other special reason (as specified)
- "O" document referring to an oral disclosure, use, exhibition or other means
- "P" document published prior to the international filing date but later than the priority date claimed
- "T" later document published after the international filing date or priority date and not in conflict with the application but cited to understand the principle or theory underlying the invention
- "X" document of particular relevance; the claimed invention cannot be considered novel or cannot be considered to involve an inventive step when the document is taken alone
- "Y" document of particular relevance; the claimed invention cannot be considered to involve an inventive step when the document is combined with one or more other such documents, such combination being obvious to a person skilled in the art
- "&" document member of the same patent family

| Date of the actual completion of the international search | Date of mailing of the international search report |
|---|---|
| **13 January 2022** | **13 January 2022** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2019)

INTERNATIONAL SEARCH REPORT

International application No.
PCT/KR2021/012442

C. DOCUMENTS CONSIDERED TO BE RELEVANT

| Category* | Citation of document, with indication, where appropriate, of the relevant passages | Relevant to claim No. |
|---|---|---|
| A | JP 2001-150821 A (FUJI PHOTO FILM CO., LTD.) 05 June 2001 (2001-06-05)<br>See entire document. | 1-18 |

Form PCT/ISA/210 (second sheet) (July 2019)

**INTERNATIONAL SEARCH REPORT**
**Information on patent family members**

International application No.
**PCT/KR2021/012442**

| Patent document cited in search report | | | Publication date (day/month/year) | Patent family member(s) | | | Publication date (day/month/year) |
|---|---|---|---|---|---|---|---|
| US | 5714570 | A | 03 February 1998 | None | | | |
| CN | 108659209 | A | 16 October 2018 | None | | | |
| JP | 2008-133407 | A | 12 June 2008 | None | | | |
| CN | 108503809 | A | 07 September 2018 | CN | 108503809 | B | 03 September 2021 |
| | | | | CN | 108623794 | A | 09 October 2018 |
| | | | | CN | 108623794 | B | 03 September 2021 |
| | | | | CN | 108774314 | A | 09 November 2018 |
| | | | | CN | 108774314 | B | 23 February 2021 |
| | | | | WO | 2019-214575 | A1 | 14 November 2019 |
| JP | 2001-150821 | A | 05 June 2001 | None | | | |

Form PCT/ISA/210 (patent family annex) (July 2019)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- CN 103483571